# FASCICULE DE BREVET EUROPEEN

(11) **EP 2 649 699 B1**
(45) Date de publication et mention de la délivrance du brevet: **21.11.2018**
(21) Numéro de dépôt: 11793776.3
(22) Date de dépôt: 07.12.2011
(51) Int. Cl.: H02J 7/00, H02J 7/04, H04M 1/73

(54) **PROCÉDÉ DE GESTION DU NIVEAU DE CHARGE D'AU MOINS DEUX BATTERIES, DISPOSITIF ET PROGRAMME D'ORDINATEUR CORRESPONDANTS**
VERFAHREN ZUR VERWALTUNG DES LADEZUSTANDES VON MINDESTENS ZWEI BATTERIEN, VORRICHTUNG UND COMPUTERPROGRAMM DAFÜR
METHOD OF MANAGING THE LEVEL OF CHARGE OF AT LEAST TWO BATTERIES, DEVICE AND COMPUTER PROGRAM CORRESPONDING THERETO

(30) Priorité: 07.12.2010 FR 1060207; 07.12.2010 FR 1060204
(43) Date de publication de la demande: 16.10.2013
(73) Titulaire: Ingenico Group, 75015 Paris (FR)
(72) Inventeur: LACROIX, Pierre, F-07130 Saint-Peray (FR)
(74) Mandataire: Vidon Brevets & Stratégie
(86) Numéro de dépôt international: PCT/EP2011/072004
(87) Numéro de publication internationale: WO 2012/076570

(56) Documents cités:
- WO-A1-2006/018229
- KR-B1- 100 837 637
- US-A1- 2003 050 102
- US-A1- 2003 178 967
- US-A1- 2007 236 975
- US-A1- 2009 023 480

## Description

### 1. Domaine de l'invention

La présente invention se rapporte au domaine des terminaux de paiement électroniques. Plus particulièrement, la présente invention se rapporte à un nouveau type de terminal de paiement électronique qui peut être formé de deux dispositifs appairés, et notamment à la gestion de l'alimentation d'un tel terminal.

### 2. Art antérieur

A l'heure actuelle, les terminaux de paiement sont majoritairement utilisés pour permettre le règlement des achats de biens et de services au sein des points de vente. Ces terminaux comprennent généralement un lecteur de carte à puce et un lecteur de carte magnétique. Ils comprennent également un écran, permettant notamment de visualiser les montants des transactions et un clavier de saisie de ces mêmes montants ainsi que des codes confidentiels saisis par les clients, ou bien un écran tactile.

Les terminaux les plus récents sont connectés à des caisses enregistreuses et/ou à des ordinateurs par l'intermédiaire d'un réseau de communication. De telles connexions peuvent être filaires, par exemple de type Ethernet, ou sans fil. Ces connexions permettent par exemple de se connecter à un serveur d'authentification ou à un serveur bancaire en vue de l'obtention d'autorisation de débit.

Pour pouvoir communiquer avec l'extérieur, et notamment avec des serveurs bancaires, le terminal de paiement utilise donc un moyen de connexion. L'un de ces moyens consiste à utiliser un réseau de communication sans fil, par exemple GPRS (de l'anglais « General Packet Radio Service »). Le terminal de paiement est alors muni d'une carte SIM (de l'anglais « *Subscriber Identity Module* »). Il s'agit d'une puce contenant un microcontrôleur et de la mémoire. Cette carte SIM est associée à un abonnement téléphonique (de type transmission de données) qui doit être souscrit par le commerçant. Outre le fait que ce type d'abonnement est relativement onéreux, la mise en oeuvre des fonctionnalités de communication est attribuée au terminal. Ainsi, en plus des fonctions de paiement, le terminal doit gérer des fonctions de communication, qui ne sont pas naturellement les fonctions que l'on attend d'un terminal de paiement.

Pour pallier le problème de coût de l'abonnement associé à la communication GPRS notamment, de nouveaux types de terminaux communiquent par l'intermédiaire d'un réseau de type « WiFi » (de l'anglais pour « Wireless Fidelity ») par exemple. Le commerçant n'est alors plus obligé de souscrire un abonnement particulier. Le terminal de paiement peut se connecter au réseau WiFi du commerçant et accéder, comme dans une connexion filaire, aux serveurs bancaires. Cependant, l'usage du terminal est alors limité à la zone de couverture du réseau WiFi, ce qui ne convient pas à une utilisation nomade (par exemple un médecin en visite chez ses patients).

Ainsi, il existe un besoin pour proposer un terminal de paiement qui puisse être utilisé par les commerçants nomades, donc en utilisant un réseau de communication sans fil de type GPRS/UMTS, tout en minimisant les coûts de mise en oeuvre d'un tel terminal de paiement.

Par ailleurs, un tel terminal de paiement doit également pouvoir bénéficier d'une autonomie adaptée à son utilisation par des commerçants nomades. Dans ce contexte il es fait référence aux documents US 2007/236975 A1, US 2003/178967 A1 et US 2009/023480 A1.

### 3. Exposé de l'invention

L'invention est telle que définie dans les revendications indépendantes 1, 6 et 8. Des formes préférentielles de l'invention sont définies dans les revendications dépendantes 2 à 5 et 7. L'invention ne présente pas ces inconvénients de l'art antérieur. L'invention se rapporte plus particulièrement à un terminal de paiement qui se présente sous la forme d'un dispositif dit « de paiement» qui est physiquement appairé à un terminal de communication.

Plus particulièrement, le terminal de communication auquel le dispositif de paiement est appairé est un terminal mobile, communément appelé « smartphone » (de l'anglais), c'est-à-dire un téléphone mobile disposant aussi de fonctions d'un assistant numérique personnel (PDA).

Ainsi, l'invention permet de pallier les inconvénients de l'art antérieur et notamment permet de ne pas avoir recours à une ligne téléphonique dédiée pour réaliser une connexion au réseau de communication et aux serveurs tels que des serveurs d'autorisation ou des serveurs bancaires.

Par ailleurs, du fait de l'appairage de deux dispositifs, l'invention présente une particularité notable en terme de gestion de la charge de chacun des deux dispositifs (le dispositif de paiement et le terminal de communication) composant le terminal de paiement.

En effet, chacun de ces dispositifs possède sa propre batterie, dont la charge évolue en fonction de l'utilisation du dispositif. Or, l'évolution de la charge de la batterie du dispositif de paiement est différente de celle de la charge du terminal de communication, du fait des fonctions spécifiques de chaque dispositif.

Ainsi, lorsque l'un des deux dispositifs est déchargé, il faut interrompre son utilisation pour le recharger, et par voie de conséquence, interrompre l'utilisation du terminal de paiement, quelque soit le niveau de charge de la batterie de l'autre dispositif.

En particulier, lorsque le dispositif de communication est déchargé, il doit être extrait du terminal de paiement pour être rechargé, de manière classique, empêchant ainsi le fonctionnement du terminal de paiement qui ne possède plus ses fonctions de communication.

On s'attache plus particulièrement dans la suite de ce document à décrire la problématique existant dans le domaine des terminaux de paiement électronique, à laquelle ont été confrontés les inventeurs de la présente demande de brevet. L'invention ne se limite bien sûr pas à ce domaine particulier d'application, mais présente un intérêt pour toute technique de terminal formé deux dispositifs appairés, devant faire face à une problématique proche ou similaire.

L'invention propose une solution nouvelle qui ne présente pas l'ensemble de ces inconvénients de l'art antérieur, sous la forme d'un procédé de gestion du niveau de charge d'au moins deux batteries alimentant respectivement un premier et un second dispositif.

Selon l'invention, les dispositifs sont aptes à coopérer physiquement entre eux via une interface modulaire et un tel procédé comprend une étape de transfert d'énergie de l'une des batteries vers l'autre batterie, l'étape de transfert étant mise en oeuvre en fonction d'un niveau de charge d'au moins une des batteries.

Ainsi, le procédé selon ce mode de réalisation de l'invention permet de s'assurer qu'aucune des batteries des deux dispositifs appairés n'atteint un niveau de charge critique nécessitant une recharge immédiate.

En effet, le procédé selon ce mode de réalisation de l'invention permet de maintenir un niveau de charge homogène pour chacune des batteries des dispositifs appairés, sans interrompre l'utilisation normale du dispositif formé par les premier et second dispositifs, par exemple un terminal de paiement, en surveillant les niveaux de charge des batteries et en transférant l'énergie d'une batterie vers l'autre si nécessaire.

Selon une caractéristique particulière de l'invention, le procédé comprend les étapes suivantes :
- obtention d'au moins une information de niveau de charge pour chacune des batteries, délivrant une première information de niveau de charge pour le premier dispositif et une seconde information de niveau de charge pour le second dispositif ;
- comparaison des première et seconde informations de niveau de charge avec respectivement un premier et un second seuils prédéterminés, délivrant respectivement un premier et un second résultats de comparaison, un résultat de comparaison étant dit positif lorsque le niveau de charge est supérieur au seuil et un résultat de comparaison étant dit négatif lorsque le niveau de charge est inférieur au seuil.

Ainsi, pour gérer de manière optimale les niveaux de charge des batteries des dispositifs appairés, le procédé se sert d'informations de niveau de charge pour l'une et/ou l'autre batterie, de façon à les comparer chacune avec un seuil prédéterminé, identique ou distinct. Il obtient ainsi, pour l'une et/ou l'autre batterie, un résultat de comparaison correspondant au statut du niveau de charge de la batterie, par exemple « niveau charge correct» lorsque le niveau est supérieur au seuil prédéterminé, ou « niveau charge faible » lorsque le niveau est inférieur au seuil prédéterminé.

Selon une autre caractéristique de l'invention, le procédé comprend également une étape de réception d'au moins une requête de transfert d'énergie d'une des batteries vers une autre batterie, en provenance d'un des dispositifs dont le niveau de charge de la batterie est inférieur à un seuil prédéterminé.

Ainsi, ce mode de réalisation de l'invention prévoit qu'un dispositif émette une requête de transfert d'énergie, lorsque le niveau de charge de sa batterie est jugé trop faible.

En particulier, l'étape de transfert d'énergie est mise en oeuvre lorsque l'une ou l'autre des conditions suivantes est vérifiée :
- le premier résultat de comparaison est négatif et le second résultat de comparaison est positif ;
- le second résultat de comparaison est négatif et le premier résultat de comparaison est positif.

Ainsi, le procédé selon ce mode de réalisation de l'invention ne met en oeuvre un transfert d'énergie d'une batterie vers une autre que lorsque l'une des deux batteries le nécessite et que l'autre des batteries présente un niveau suffisant, par rapport à un seuil prédéterminé. Cela permet de ne pas transférer de l'énergie d'une batterie dont le niveau de charge est faible.

Selon un autre mode de réalisation, l'étape de transfert d'énergie est mise en oeuvre lorsqu'une requête de transfert d'énergie a été reçue lors de l'étape de réception et lorsque l'une ou l'autre des conditions suivantes est vérifiée :
- le premier résultat de comparaison est négatif et le second résultat de comparaison est positif ;
- le second résultat de comparaison est négatif et le premier résultat de comparaison est positif.

Dans ce cas, le transfert d'énergie n'est mis en oeuvre que si une requête a été émise par un des dispositifs. Ainsi, la décision de transfert n'est pas seulement soumise à des conditions de niveau de charge par rapport à des seuils prédéterminés, mais également à une requête explicite de transfert.

Selon une caractéristique particulière, l'étape de transfert d'énergie est mise en oeuvre par l'interface modulaire assurant l'appairage physique des deux dispositifs. En effet, cette interface permet la communication entre les deux dispositifs, et en particulier, le transfert d'énergie de la batterie de l'un des dispositifs vers la batterie de l'autre.

En particulier, le premier dispositif peut être un dispositif de paiement et le second dispositif un dispositif de communication.

Un autre aspect de l'invention concerne un composant de gestion du niveau de charge d'au moins deux batteries alimentant respectivement un premier et un second dispositif.

Selon l'invention, les dispositifs sont aptes à coopérer physiquement entre eux via une interface modulaire et un tel dispositif de gestion du niveau de charge est apte à mettre en oeuvre les étapes du procédé décrit précédemment, et comprend notamment des moyens de transfert d'énergie de l'une es batteries vers l'autre batterie, les moyens de transfert d'énergie étant activés en fonction d'un niveau de charge d'au moins une des batteries.

Selon un mode de réalisation particulier, le composant est implanté dans un premier dispositif comprenant des moyens de paiement, dont des moyens de lecture d'une carte à puce et des moyens de lecture d'une carte magnétique, et en ce que ledit second dispositif est un terminal téléphonique, ledit premier dispositif comprenant des moyens pour recevoir et communiquer avec ledit terminal téléphonique.

L'invention concerne également un programme d'ordinateur comprenant des instructions pour la mise en oeuvre du procédé décrit précédemment, lorsque ce programme est exécuté par un processeur.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1A à 1D illustrent un exemple de terminal de paiement selon un mode de réalisation de l'invention ;
- les figures 2A et 2B illustrent les principales étapes du procédé de gestion du niveau de charge d'au moins deux batteries pour un terminal de paiement tel qu'illustré en figures 1A à 1D, selon un mode de réalisation de l'invention ;
- la figure 3 décrit un exemple de structure de dispositif de gestion du niveau de charge d'au moins deux batteries pour un terminal de paiement tel qu'illustré en figures 1A à 1D, selon un mode de réalisation de l'invention.

### 5. Description d'un mode de réalisation de l'invention

Le principe général de l'invention repose sur l'appairage physique de deux dispositifs, par exemple un dispositif de paiement et un terminal de communication, tel qu'un terminal téléphonique, par exemple un « smartphone », pour former un terminal de paiement, et sur la gestion de la charge de ces deux dispositifs.

Plus particulièrement, dans un mode de réalisation de l'invention, le dispositif de paiement est physiquement appairé avec le terminal de communication par l'intermédiaire d'une structure d'appairage particulière, appelée interface modulaire du fait de sa décomposition en modules physiques. Lorsqu'elle est utilisée, cette interface modulaire est fixée sur une face arrière du dispositif de paiement. Cette structure est démontable, selon un mode de réalisation particulier de l'invention, en mettant en oeuvre une cinématique particulière.

Cette interface modulaire, selon l'invention, permet d'insérer et de retenir le terminal de communication dans un logement prévu à cet effet. Parmi les éléments de cette interface modulaire, selon l'invention, on distingue notamment un dispositif d'appairage, encore appelé carte électronique de connexion, permettant de réaliser une connexion physique entre le dispositif de paiement et le terminal de communication.

Cette interface modulaire comprend d'autres éléments, qui, selon l'invention, permettent d'assurer une sécurité d'usage du terminal de paiement formé du dispositif de paiement et du terminal de communication.

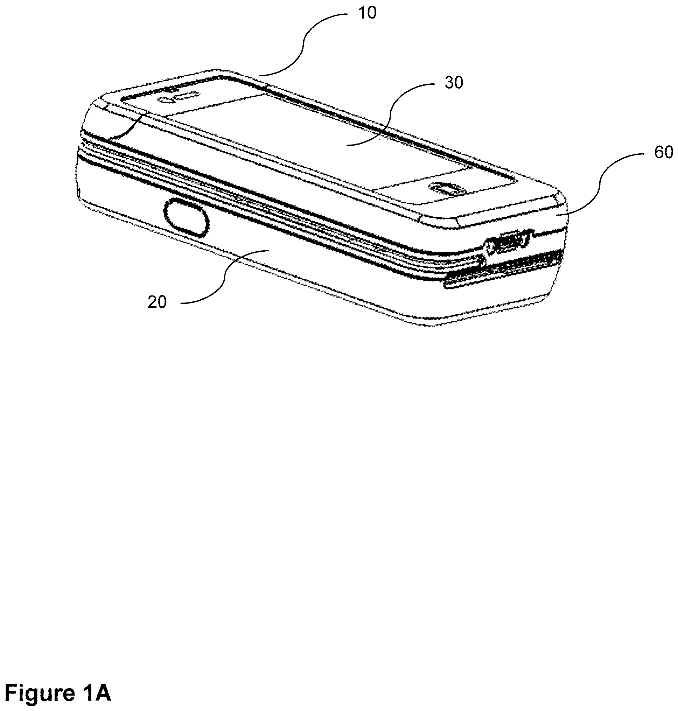

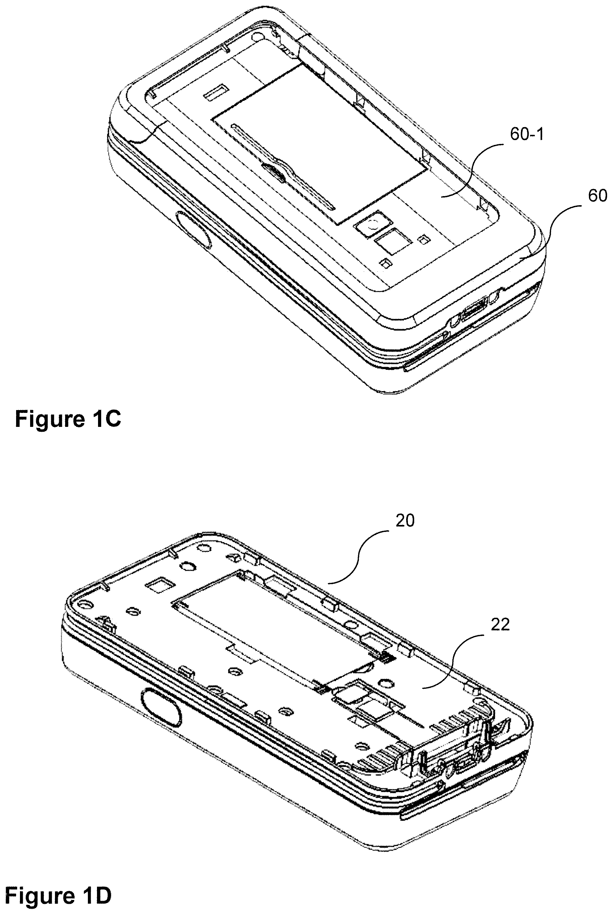

Plus particulièrement, le terminal de paiement objet de l'invention est décrit en relation avec les figures 1A à 1D.

Le terminal de paiement (10) comprend deux composants généraux que sont le dispositif de paiement (20) et le terminal de communication (30).

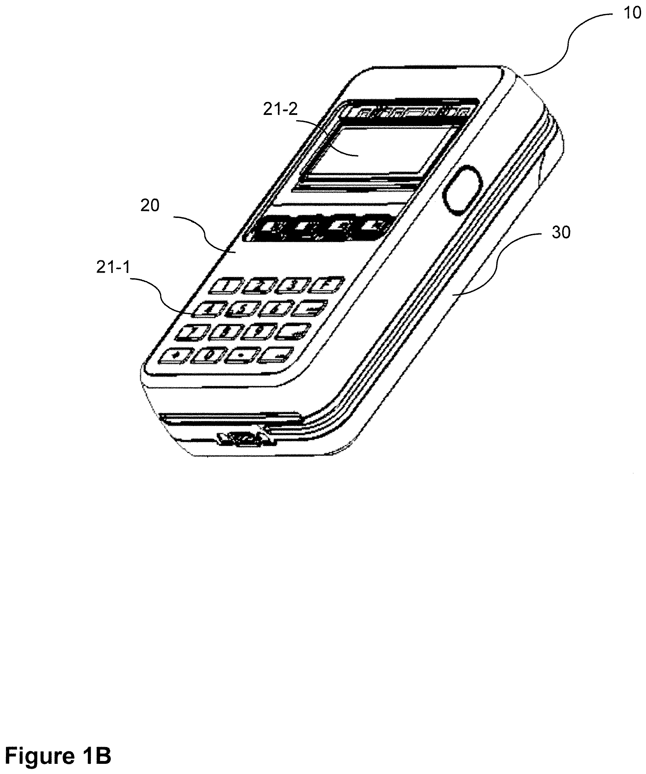

Comme illustré dans un mode de réalisation illustratif et non limitatif de l'invention, le dispositif de paiement (20) comprend une face avant, visible sur la figure 1B, présentant un clavier pour la saisie d'information (21-1) et un écran de visualisation (21-2) des informations saisies. Le dispositif de paiement comprend, en face arrière, visible sur la figure 1D, une surface (22) permettant la fixation d'une interface modulaire (60) pour l'appairage du terminal de communication (30).

Plus particulièrement, cette interface modulaire définit un logement (60-1) d'insertion et d'appairage du terminal de communication (30).

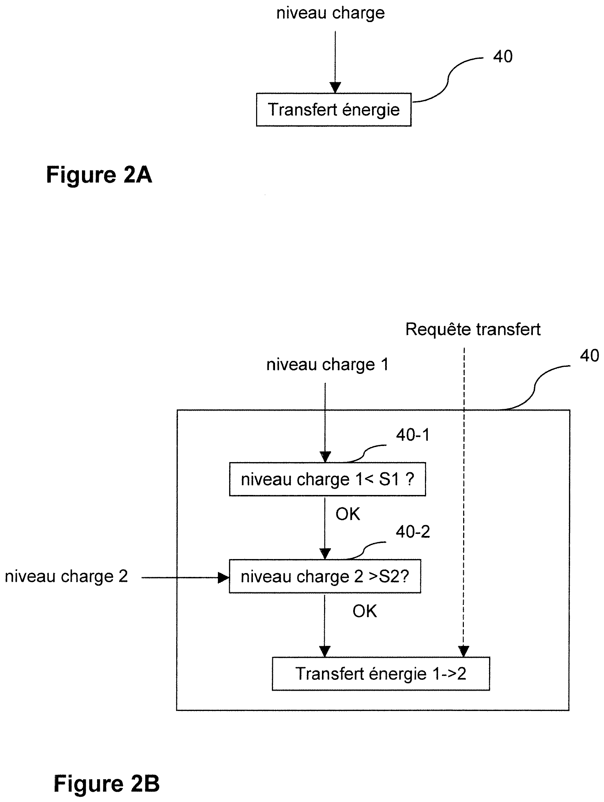

On présente maintenant, en relation avec les figures 2A et 2B, un exemple de procédé de gestion de la charge d'au moins deux batteries, selon un mode de réalisation de l'invention.

A partir d'une information de niveau de charge d'une batterie, le procédé met en oeuvre une étape 40 de transfert d'énergie d'une batterie vers une autre.

Plus particulièrement, on considère que c'est le premier dispositif, par exemple un dispositif de paiement (20) qui met en oeuvre la gestion de la charge de sa propre batterie et de la batterie du second dispositif, par exemple un dispositif de communication (30).

Ainsi, lorsque le terminal de paiement formé d'un dispositif de paiement et d'un dispositif de communication est utilisé, le procédé de gestion selon ce mode de réalisation permet de maintenir des niveaux de charge homogènes pour les deux batteries.

Pour ce faire, et comme illustré en figure 2B, le procédé de gestion obtient une information de niveau de charge de la batterie du second dispositif, par exemple un dispositif de communication, notée « niveau de charge 1 ».

Cette information de niveau de charge est fournie par le second dispositif, via l'interface modulaire (60), de façon continue, périodique, ou uniquement lorsque le niveau de charge se situe en dessous d'un seuil prédéterminé.

Il est à noter que le niveau de charge de la batterie du second dispositif est surveillé et géré par le second dispositif de communication, de manière classique.

Par ailleurs, le procédé de gestion obtient une information de niveau de charge de la batterie du premier dispositif, par exemple un dispositif de paiement, notée « niveau de charge 2 ». Cette information de niveau de charge 2 est fournie par le premier dispositif qui surveille lui-même le niveau de charge de sa batterie, et a donc cette information à sa disposition lorsqu'il met en oeuvre le procédé de gestion selon l'invention.

A partir de ces deux informations de niveau de charge, le procédé selon l'invention met en oeuvre, successivement ou en parallèle, les étapes (40-1) et (40-2) qui consistent à comparer chaque information de niveau de charge avec un seuil prédéterminé.

Dans un premier temps, le niveau de charge de la batterie du second dispositif est comparé avec un seuil S1 lors de l'étape (40-1), de façon à déterminer si un transfert d'énergie est nécessaire.

Dans un deuxième temps, et comme illustré sur la figure 2B, lorsque le résultat de la comparaison précédente est négatif (c'est-à-dire lorsque le niveau de charge 1 est inférieur au seuil S1), le niveau de charge de la batterie du premier dispositif est comparé avec un seuil S2 lors de l'étape (40-2), de façon à déterminer si un transfert d'énergie est envisageable.

Enfin, si le résultat de la comparaison précédente est positif, une étape de transfert d'énergie de la batterie du premier dispositif vers la batterie du second dispositif est mise en oeuvre.

Plus particulièrement, dans ce mode de réalisation, les moyens de gestion du niveau de charge vérifient que l'on dispose d'assez d'énergie dans l'un et l'autre terminal pour effectuer une transaction jusqu'au bout. Ainsi, l'invention permet de s'assurer que la transaction bancaire pourra aboutir. Cette caractéristique permet de répondre aux problèmes posés par l'utilisation de terminaux à batteries, surtout en situation de mobilité.

Ainsi, lorsque le niveau de charge de la batterie du deuxième dispositif est insuffisant et qu'une transaction doit se dérouler, les moyens de gestion du niveau de charge mettent en oeuvre le transfert d'énergie afin de fournir suffisamment d'énergie au deuxième dispositif. L'inverse est également possible : lorsque le niveau de charge de la batterie du premier dispositif est insuffisant et qu'une transaction doit se dérouler, les moyens de gestion du niveau de charge mettent en oeuvre le transfert d'énergie afin de fournir suffisamment d'énergie au premier dispositif.

Selon une variante de ce mode de réalisation, cette étape de transfert n'est mise en oeuvre que si une requête de transfert a été émise par le second dispositif.

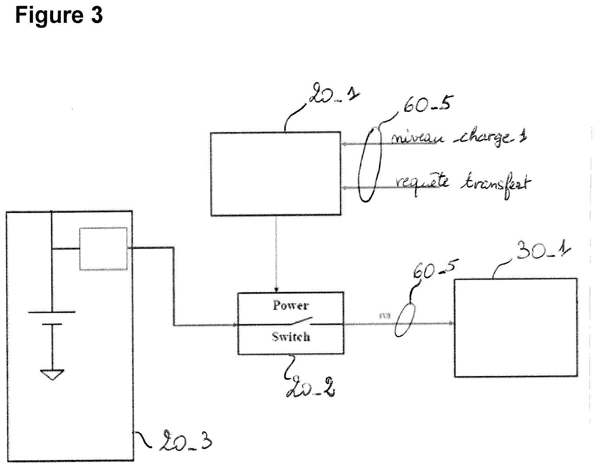

On présente maintenant, en relation avec la figure 3, un exemple de structure d'un dispositif de gestion du niveau de charge d'au moins deux batteries pour un terminal de paiement, selon un mode de réalisation particulier de l'invention.

On considère, dans ce mode de réalisation, que c'est un dispositif de paiement (20), via des moyens (20-1, 20-2), qui met en oeuvre la gestion de la charge de sa propre batterie (20-3) et de la batterie d'un dispositif de communication (30).

Les moyens (20-1) reçoivent, via une liaison série de la carte de communication 60-5 de l'interface modulaire 60, une information de niveau de charge 1, et, le cas échéant, une requête de transfert d'énergie.

Comme indiqué précédemment, cette information de niveau de charge 1 peut être reçue en continu, périodiquement, ou seulement lorsque le niveau de charge est inférieur à un seuil.

Les moyens (20-1) disposent également d'une information de niveau de charge 2 de la batterie (20-3) du dispositif de paiement, et effectuent les comparaisons des niveaux de charge 1 et 2 respectivement avec des seuils S1 et S2.

En fonction des résultats de ces comparaisons, les moyens (20-2) sont activés de manière à permettre un transfert d'énergie de la batterie (20-3) vers le dispositif de communication 30. Plus particulièrement, le transfert d'énergie est effectué vers une interface série 30-1 du dispositif de communication, via une liaison série de la carte de communication 60-5 de l'interface modulaire 60.

Une autre application de l'invention consiste à gérer le niveau de charge des batteries de chacun des dispositifs appairés lorsque le terminal de paiement est en charge, par l'intermédiaire de sa base d'alimentation.

Dans ce cas, l'alimentation fournie au dispositif de paiement (20) est également transmise au dispositif de communication (30), par l'intermédiaire de l'interface modulaire (60) permettant l'appairage des deux dispositifs. Le dispositif de communication gérant indépendamment le niveau de charge de sa propre batterie utilise ou non cette source d'énergie pour recharger sa batterie.

De cette manière, lorsque le terminal de paiement (10) est en cours de charge, la batterie de chaque dispositif (20, 30) formant le terminal de paiement peut être rechargée.

## Revendications

1. Procédé de gestion du niveau de charge d'au moins deux batteries alimentant respectivement un premier et un second dispositif (20, 30), lesdits dispositifs étant aptes à coopérer physiquement entre eux via une interface modulaire (60), ledit procédé comprenant une étape (40) de transfert d'énergie de l'une desdites batteries vers l'autre desdites batteries, ladite étape de transfert étant mise en oeuvre en fonction d'un niveau de charge d'au moins une desdites batteries, le procédé comprenant en outre les étapes suivantes :
- obtention d'au moins une information de niveau de charge pour chacune desdites batteries, délivrant une première information de niveau de charge pour ledit premier dispositif et une seconde information de niveau de charge pour ledit second dispositif;
- comparaison (40-1, 40-2) desdites première et seconde informations de niveau de charge avec respectivement un premier (S1) et un second (S2) seuils prédéterminés, délivrant respectivement un premier et un second résultats de comparaison, un résultat de comparaison étant dit positif lorsque le niveau de charge est supérieur au seuil et un résultat de comparaison étant dit négatif lorsque le niveau de charge est inférieur au seuil ;
ladite étape de transfert d'énergie est mise en oeuvre lorsque l'une ou l'autre des conditions suivantes est vérifiée :
- le premier résultat de comparaison est négatif et le second résultat de comparaison est positif;
- le second résultat de comparaison est négatif et le premier résultat de comparaison est positif.

2. Procédé de gestion du niveau de charge d'au moins deux batteries selon la revendication 1, **caractérisé en ce qu'**il comprend une étape de réception d'au moins une requête de transfert d'énergie d'une desdites batteries vers une autre desdites batteries, en provenance d'un desdits dispositifs dont le niveau de charge de la batterie est inférieur à un seuil prédéterminé.

3. Procédé de gestion du niveau de charge d'au moins deux batteries selon la revendication 2, **caractérisé en ce que** ladite étape de transfert d'énergie est mise en oeuvre lorsqu'une requête de transfert d'énergie a été reçue lors de ladite étape de réception et lorsque l'une ou l'autre des conditions suivantes est vérifiée :
- le premier résultat de comparaison est négatif et le second résultat de comparaison est positif;
- le second résultat de comparaison est négatif et le premier résultat de comparaison est positif.

4. Procédé de gestion du niveau de charge d'au moins deux batteries selon la revendication 1, **caractérisé en ce que** ladite étape de transfert d'énergie est mise en oeuvre par ladite interface modulaire (60).

5. Procédé de gestion du niveau de charge d'au moins deux batteries selon la revendication 1, **caractérisé en ce que** ledit premier dispositif est un dispositif de paiement et ledit second dispositif est un dispositif de communication.

6. Composant de gestion du niveau de charge d'au moins deux batteries alimentant respectivement un premier et un second dispositif (20, 30), lesdits dispositifs sont aptes à coopérer physiquement entre eux via une interface modulaire (60), ledit dispositif de gestion comprend des moyens (20-1, 20-2, 60-5) de transfert d'énergie de l'une desdites batteries vers l'autre desdites batteries, lesdits moyens de transfert d'énergie étant activés en fonction d'un niveau de charge d'au moins une desdites batteries, ledit composant de gestion comprend en outre :
- des moyens d'obtention d'au moins une information de niveau de charge pour chacune desdites batteries, délivrant une première information de niveau de charge pour ledit premier dispositif et une seconde information de niveau de charge pour ledit second dispositif;
- des moyens de comparaison (40-1, 40-2) desdites première et seconde informations de niveau de charge avec respectivement un premier (S1) et un second (S2) seuils prédéterminés, délivrant respectivement un premier et un second résultats de comparaison, un résultat de comparaison étant dit positif lorsque le niveau de charge est supérieur au seuil et un résultat de comparaison étant dit négatif lorsque le niveau de charge est inférieur au seuil ;
lesdits moyens de transfert d'énergie sont mis en oeuvre lorsque l'une ou l'autre des conditions suivantes est vérifiée :
- le premier résultat de comparaison est négatif et le second résultat de comparaison est positif;
- le second résultat de comparaison est négatif et le premier résultat de comparaison est positif.

7. Composant selon la revendication 6, **caractérisé en ce qu'**il est implanté dans un premier dispositif comprenant des moyens de paiement, dont des moyens de lecture d'une carte à puce et des moyens de lecture d'une carte magnétique, et **en ce que** ledit second dispositif est un terminal téléphonique, ledit premier dispositif comprenant des moyens pour recevoir et communiquer avec ledit terminal téléphonique.

8. Programme d'ordinateur comprenant des instructions pour la mise en oeuvre d'un procédé selon l'une quelconque des revendications 1 à 5 lorsque ce programme est exécuté par un processeur.

## Patentansprüche

1. Verfahren zur Verwaltung des Ladezustands von mindestens zwei Batterien, die jeweils eine erste und eine zweite Vorrichtung (20, 30) versorgen, wobei die Vorrichtungen geeignet sind, physikalisch untereinander über eine modulare Schnittstelle (60) zusammenzuwirken, umfassend einen Schritt (40) des Transfers von Energie von einer der Batterien zur anderen der Batterien, wobei der Transferschritt als Funktion eines Ladezustands mindestens einer der Batterien durchgeführt wird, wobei das Verfahren außerdem die folgenden Schritte umfasst:
- Erhalten mindestens einer Information über den Ladezustand für jede der Batterien, wobei eine erste Information über den Ladezustand für die erste Vorrichtung und eine zweite Information über den Ladezustand für die zweite Vorrichtung geliefert werden,
- Vergleichen (40-1, 40-2) der ersten und zweiten Information über den Ladezustand mit jeweils einer ersten (S1) und einer zweiten (S2) vorherbestimmten Schwelle, wobei jeweils ein erstes und ein zweites Vergleichsergebnis geliefert werden, wobei ein Vergleichsergebnis als positiv bezeichnet wird, wenn der Ladezustand über der Schwelle liegt, und ein Vergleichsergebnis als negativ bezeichnet wird, wenn der Ladezustand unter der Schwelle liegt;
wobei der Schritt des Transfers von Energie durchgeführt wird, wenn die eine oder die andere der folgenden Bedingungen verifiziert wird:
- das erste Vergleichsergebnis ist negativ und das zweite Vergleichsergebnis ist positiv;
- das zweite Vergleichsergebnis ist negativ und das erste Vergleichsergebnis ist positiv.

2. Verfahren zur Verwaltung des Ladezustands von mindestens zwei Batterien nach Anspruch 1, **dadurch gekennzeichnet, dass** dieses einen Schritt des Empfangens mindestens einer Anforderung für den Transfer von Energie von einer der Batterien zu einer anderen der Batterien von einer der Vorrichtungen umfasst, deren Ladezustand der Batterie unter einer vorherbestimmten Schwelle liegt.

3. Verfahren zur Verwaltung des Ladezustands von mindestens zwei Batterien nach Anspruch 2, **dadurch gekennzeichnet, dass** der Schritt des Transfers von Energie durchgeführt wird, wenn eine Anforderung für den Transfer von Energie während des Empfangsschritts empfangen wurde, und wenn die eine oder die andere der folgenden Bedingungen verifiziert wird:
- das erste Vergleichsergebnis ist negativ und das zweite Vergleichsergebnis ist positiv;
- das zweite Vergleichsergebnis ist negativ und das erste Vergleichsergebnis ist positiv.

4. Verfahren zur Verwaltung des Ladezustands von mindestens zwei Batterien nach Anspruch 1, **dadurch gekennzeichnet, dass** der Schritt des Transfers von Energie von der modularen Schnittstelle (60) durchgeführt wird.

5. Verfahren zur Verwaltung des Ladezustands von mindestens zwei Batterien nach Anspruch 1, **dadurch gekennzeichnet, dass** die erste Vorrichtung eine Zahlungsvorrichtung ist, und die zweite Vorrichtung eine Kommunikationsvorrichtung ist.

6. Komponente zur Verwaltung des Ladezustands von mindestens zwei Batterien, die jeweils eine erste und eine zweite Vorrichtung (20, 30) versorgen, wobei die Vorrichtungen geeignet sind, physikalisch untereinander über eine modulare Schnittstelle (60) zusammenzuwirken, wobei die Verwaltungsvorrichtung Mittel (20-1, 20-2, 60-5) zum Transferieren von Energie von der einen der Batterien zur anderen der Batterien umfasst, wobei die Mittel zum Transferieren von Energie als Funktion eines Ladezustands mindestens einer der Batterien aktiviert werden, wobei die Verwaltungskomponente außerdem umfasst:
- Mittel zum Erhalten mindestens einer Information über den Ladezustand für jede der Batterien, wobei eine erste Information über den Ladezustand für die erste Vorrichtung und eine zweite Information über den Ladezustand für die zweite Vorrichtung geliefert werden,
- Mittel zum Vergleichen (40-1, 40-2) der ersten und zweiten Information über den Ladezustand mit jeweils einer ersten (S1) und einer zweiten (S2) vorherbestimmten Schwelle, wobei jeweils ein erstes und ein zweites Vergleichsergebnis geliefert werden, wobei ein Vergleichsergebnis als positiv bezeichnet wird, wenn der Ladezustand über der Schwelle liegt, und ein Vergleichsergebnis als negativ bezeichnet wird, wenn der Ladezustand unter der Schwelle liegt;
wobei die Mittel zum Transferieren von Energie aktiviert werden, wenn eine oder die andere der folgenden Bedingungen verifiziert wird:
- das erste Vergleichsergebnis ist negativ und das zweite Vergleichsergebnis ist positiv;
- das zweite Vergleichsergebnis ist negativ und das erste Vergleichsergebnis ist positiv.

7. Komponente nach Anspruch 6, **dadurch gekennzeichnet, dass** diese in eine erste Vorrichtung eingebaut ist, umfassend Zahlungsmittel, darunter Mittel zum Lesen einer Chipkarte und Mittel zum Lesen einer Magnetkarte, und dadurch, dass die zweite Vorrichtung ein Telefongerät ist, wobei die erste Vorrichtung Mittel zum Empfangen und Kommunizieren mit dem Telefongerät umfasst.

8. Computerprogramm, umfassend Instruktionen zur Durchführung eines Verfahrens nach einem der Ansprüche 1 bis 5, wenn dieses Programm von einem Prozessor ausgeführt wird.

## Claims

1. Method for managing the level of charge of at least two batteries respectively powering a first device and a second device (20, 30), said devices being capable of physically cooperating with each other via a modular interface (60), said method comprising a step (40) for transferring energy from one of said batteries to the other of said batteries, said step for transferring being carried out according to a level of charge of at least one of said batteries, method furthermore comprising the following steps:
- obtaining at least one piece of information on level of charge for each of said batteries, delivering a first piece of information on level of charge for said first device and a second piece of information on level of charge for said second device;
- comparing (40-1, 40-2) the first and second pieces of information on level of charge with, respectively, a first predetermined threshold (S1) and a second predetermined threshold (S2), respectively delivering a first comparison result and a second comparison result, a comparison result being said to be positive when the level of charge is above the threshold and a comparison result being said to be negative when the level of charge is below the threshold.
Said step for transferring energy is carried out when either of the following conditions is verified:
- the first result of comparison is negative and the second result of comparison is positive;
- the second result of comparison is negative and the first result of comparison is positive.

2. Method for managing the level of charge of at least two batteries according to claim 1, **characterized in that** it comprises a step for receiving at least one request for transfer of energy from one of said batteries to another of said batteries, coming from one of said devices for which the level of charge of its battery is below a predetermined threshold.

3. Method for managing the level of charge of at least two batteries according to claim 2, **characterized in that** said step for transferring energy is carried out when a request for transfer of energy has been received during sais step for receiving and when either of the following conditions is verified:
- the first result of comparison is negative and the second result of comparison is positive;
- the second result of comparison is negative and the first result of comparison is positive.

4. Method for managing the level of charge of at least two batteries according to claim 1, **characterized in that** said step for transferring energy is carried out by said modular interface (60).

5. Method for managing the level of charge of at least two batteries according to claim 1, **characterized in that** said first device is a payment device and said second device is a communications device.

6. Component for managing the level of charge of at least two batteries respectively powering a first device and a second device (20, 30), said devices being capable of physically cooperating with one another via a modular interface (60), said device for managing comprising means (20-1, 20-2, 60-5) for transferring energy from one of said batteries to the other of said batteries, said means for transferring being activated according to a level of charge of at least one of said batteries, said device furthermore comprising:
- means obtaining at least one piece of information on level of charge for each of said batteries, delivering a first piece of information on level of charge for said first device and a second piece of information on level of charge for said second device;
- means for comparing (40-1, 40-2) said first and second pieces of information on level of charge with, respectively, a first predetermined threshold (S1) and a second predetermined threshold (S2), respectively delivering a first comparison result and a second comparison result, a comparison result being said to be positive when the level of charge is above the threshold and a comparison result being said to be negative when the level of charge is below the threshold.
Said means for transferring energy are implemented when either of the following conditions is verified:
- the first result of comparison is negative and the second result of comparison is positive;
- the second result of comparison is negative and the first result of comparison is positive.

7. Component according to claim 6, **characterized in that** it is implanted in a first device comprising payment means, including means for reading a smartcard and means for reading a magnetic card, and **in that** said second device is a telephone terminal, said first device comprising means to receive and communicate with said telephone terminal.

8. Computer program comprising instructions for implementing a method according to any one of the claims 1 to 5, when this program is executed by a processor.
